# EUROPEAN PATENT SPECIFICATION

(11) **EP 1 829 256 B1**
(45) Date of publication and mention of the grant of the patent: **28.07.2010**
(21) Application number: 05816143.1
(22) Date of filing: 14.11.2005
(51) Int. Cl.: H04J 3/06

(54) **SYNCHRONISATION IN A COMMUNICATIONS NETWORK**
SYNCHRONISATION IN EINEM KOMMUNIKATIONSNETZ
SYNCHRONISATION DANS UN RESEAU DE COMMUNICATIONS

(30) Priority: 22.12.2004 GB 0428032
(43) Date of publication of application: 05.09.2007
(73) Proprietor: Ericsson AB, 164 80 Stockholm (SE)
(72) Inventor: BRUNE, Andreas, 71522 Backnang (DE); MUELLER, Torsten, 71737 Kirchberg an de Murr (DE)
(74) Representative: Stasiewski, Piotr Grzegorz
(86) International application number: PCT/EP2005/055945
(87) International publication number: WO 2006/067002

(56) References cited:
- WO-A-00/18050
- PATENT ABSTRACTS OF JAPAN vol. 016, no. 048 (E-1163), 6 February 1992 (1992-02-06) & JP 03 250829 A (FUJITSU LTD), 8 November 1991 (1991-11-08)

## Description

The present invention relates to the field of communications networks in general and, in particular, to selection of sources of timing information in communications networks.

A number of communications networks in use today rely on the exchange of accurate timing information, e.g. to enable the communication of data synchronised to a particular timing reference. Typically in such a network, timing information will be passed from one node to the next along with the data signal, so creating a synchronisation path through communicating nodes. It is desirable in such a system to ensure that each node uses the best available source of timing information.

Certain networks provide an indication of the quality of timing information in a status message that is carried as part of the timing information. A node can use this status message to assist in the task of deciding which of a number of potential sources of timing information should be selected.

A conventional synchronous communications network comprises a number of interconnected nodes or network elements arranged to exchange data, timing and control signalling according to a synchronous hierarchy, as set out for example in synchronous digital hierarchy (SDH) standards published by the International Telecommunications Union (ITU), see "Network Node Interface for the Synchronous Digital Hierarchy (SDH)" ITU-T Recommendation G.707/Y.1322. The corresponding SONET system defined by the American National Standards Institute (ANSI) can be considered as a sub-set of SDH and reference to SDH hereafter includes SONET. Typically, in such networks, timing information will be passed from one node to the next, along with the data signal, so creating a synchronisation path through communicating nodes.

ITU-T Recommendation G.803 "Architecture of transport networks based on the synchronous digital hierarchy (SDH)" 03/2000 describes SDH timing (also referred to as "clock") distribution rules.

ITU-T Recommendation G.807/Y.1302 "Requirements for automatic switched transport networks (ASTN)" 07/2001 describes network level requirements for the control plane of automatically switched transport networks. The control plane supports the establishment, teardown and maintenance of end-to-end connections and routeing to select the most appropriate path through the network.

A hierarchy of synchronisations sources is defined in SDH. The Primary Reference Clock (PRC) occupies the top level of the SDH synchronisation source hierarchy. Nodes or network elements (NE) with no PRC need to derive their timing information directly or indirectly from a PRC located at another node. The intermediate level source is represented by the Synchronisation Supply Unit (SSU) for filtering the received timing information and providing a holdover capability in case of loss of signal. To provide holdover, the SSU has the ability to "free run", i.e. to maintain an accurate timing information output and keep the output frequency, obtained from an internal oscillator, within the allowed limits for at least 24 hours in the absence of a suitable reference input. An important parameter of the SSU is the quality of the timing information. The lowest level in the synchronisation source hierarchy is the SDH Equipment Clock (SEC). Each SDH node contains a SEC. The holdover capability of a SEC will provide the required synchronisation for at least 15 seconds.

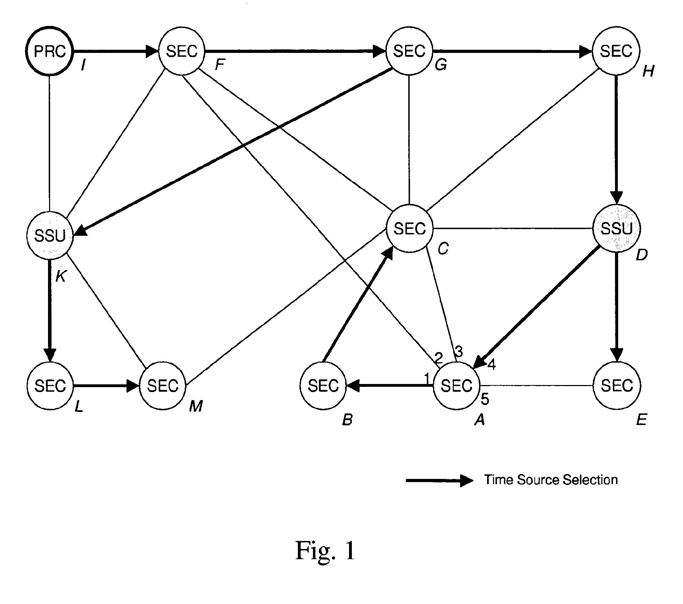

Figure 1 shows, by way of example, a conventional SDH network with a number of nodes labelled A to I and K to M (shown as circles) interconnected by links. The quality of the timing reference (i.e. the timing status) of each node is indicated as either PRC for primary reference (node I), SSU for synchronization supply unit (nodes G and K) or SEC for SDH equipment clock (nodes A to C, E to H, L and M). In Figure 1, line segments indicate links carrying data whereas links carrying data and timing information are indicated by arrows with the direction of the arrow indicating the flow of timing information. In practice, the distribution of timing information for a data network may be provided by the data network itself or by a supplementary network. No single node has a direct connection to every other node, however, many nodes are connected directly to more than one neighbouring node. For example, node A is connected directly to node B via connection 1, to node F via connection 2, to node C via connection 3, to node D via connection 4 and node E via connection 5. In conventional SDH networks, node timing status information is communicated between neighbouring nodes via the data links in synchronization status messages (SSM).

If more than one link terminates at the same node (such as node A in Figure 1) it is necessary to choose a suitable link as the timing source for that node. Node A has a direct connection with nodes B, C, D, E and F. From these connections, the link from node D is selected. In selecting a link from which to derive the timing information it is necessary to avoid the formation of loops in the timing flow. Furthermore, other rules have to be fulfilled in order to assure the quality of the timing information, e.g. the number of SECs and SSUs between the PRC and the node is limited (as described below).

A significant feature of synchronous systems is the ability of networks to automatically recover from synchronisation failures, i.e. the failure of a link or a node supplying timing information. To support this feature each node conventionally requires a pre-configured synchronisation source priority table. A priority value is assigned in the table to each of the synchronisation sources available to a node and the node can use the priority table to identify the source with the highest priority. The node autonomously selects the available source with the highest quality based on the SSM values. The node can also use the pre-configured priority table in the selection of a source to use to synchronise data signals sent out from that node.

If a link selected to supply timing information fails, it is necessary to switch to get timing information from another link. This has to be done very quickly in order to maintain synchronisation. Controlling the switching locally reduces the delay associated with changing the source of timing information. In switching to a new source, it is important to ensure that a suitable link is chosen.

In the example of Figure 1, SEC node A receives timing information from SSU node D via connection 4. Node A in turn supplies timing information to node B, via connection 1. Node B in turn supplies timing information to node C. Node C does not supply timing information to any other node. If a fault occurs in node D or in the link from A to D, node A is required to select an alternative source of timing information. Conventional selection strategies based on SSM and source identification are capable of identifying the link to node B as unusable. This is because node A is aware that node B obtains its timing information directly from A.

A timing loop occurs when timing information transmitted by a node is returned (i.e. looped-backed) to the same node that then selects that looped-backed timing information as its source - thus "closing the loop". Such a loop leads to degradation of the timing information. In the above example, selection of connection 1 from node B would result in a timing loop from node A to node B and back again. Similarly, selection of connection 3 from node C would result in a timing loop from node A via nodes B and C and back to node A. Conventionally, connections 2, 3 and 5 on node A may be identified as valid alternative sources. In order to avoid creating a timing loop in the conventional system, connection 3 must be manually marked as unusable.

In British Patent Number 2355898 issued to Marconi Communications Limited a synchronous digital communications system is described in which timing information is exchanged between nodes and a port identification message is associated with the timing information to avoid timing information received at any port at a node being retransmitted from the same port.

In British Patent Number 2301991 issued to Marconi Communications Limited each node attaches a status message to timing information passing through the node that identifies that node. In addition each node contains an arrangement to check received timing information and to reject it if it contains the identity of that node.

There is known a document related to obtaining synchronization information in a telecommunications network, namely WO98/35466. However, operations as in the invention now to be described are neither disclosed nor suggested in this prior art document.

Modem networks are increasing inhomogeneous in nature with synchronous networks such as those based on SDH interconnecting with non-synchronous networks such as those based on IP, MPLS and ATM These factors make static planning of timing distribution networks more difficult. Protection switching can lead to sudden changes in the topology of a timing distribution network that the static timing source selection is unable to adapt to.

Furthermore, SDH links using an optical layer may suffer a decrease in the quality of the timing information so that DWDM / OTN cannot be used for the distribution of timing information. In networks with a dynamic DWDM layer the situation is complicated by the fact that SDH links can be dynamically established and deleted. Static planning of SDH synchronisation may not be suitable in such networks.

In order to address these problems, the present invention provides a communications network comprising a plurality of nodes in which each node comprises means for communicating timing information with at least one other node and in which each node is associated with a timing status, each one of the network nodes comprises topology means for detecting the topology of the network and for detecting the timing status of each node, wherein timing status information sent by a node and used by other nodes to detect the timing status of each other node comprises identification of the node sending the timing information, the type of equipment clock from which said sending node derives its timing information, timing information quality and information on the source where said sending node obtains primary and secondary timing information and every network node further comprises a timing information node table comprising information on sources and derivation of the timing information and quality of said timing information of all other nodes in the network as well as every network node comprises selection means for using the detected information in a process of selecting a source from which the node derives timing information.

According to a preferred embodiment of the present invention, the network may comprise means for detecting the flow of timing information between the nodes and for providing information on the timing flow to the selected node.

According to a further preferred embodiment of the present invention, the network comprises means for detecting those nodes that would result in a timing loop if chosen as the source of timing information.

According to a further preferred embodiment of the present invention, the topology means is distributed among the plurality of nodes.

According to a further preferred embodiment of the present invention, the topology means comprises a routing protocol.

According to a further preferred embodiment of the present invention, the selection process comprises a spanning-tree algorithm.

The present invention also provides a method of selecting a source of timing information in a communications network comprising a plurality of nodes, the method including the steps, performed by every network node, of: detecting information concerning the topology of the communications network, detecting information concerning the timing status of the nodes, wherein timing status information sent by a node and used by other nodes to detect the timing status of each other node comprises identification of the node sending the timing information, the type of equipment clock from which said sending node derives its timing information, timing information quality and information on the source where said sending node obtains primary and secondary timing information, maintaining a timing information node table comprising information on sources and derivation of the timing information and quality of said timing information of all other nodes in the network and selecting a source from which the node derives timing information using the information provided.

According to a preferred embodiment of the present invention, the method includes the steps of detecting the flow of timing information between the nodes and providing the timing flow information to the selected node.

According to a further preferred embodiment of the present invention, the method includes the steps of detecting those ones of the plurality of nodes that would result in a timing loop if chosen as a source of timing information

Embodiments of the invention will now be described by way of example with reference the drawings in which
Figure 1 shows a conventional SDH network;
Figures 2, 4 and 6 show networks with timing distribution and timing selection controllers according to the present invention;
Figures 3, 5 and 7 show the timing distribution networks of Figures 2, 4 and 6, respectively, represented as a tree structure.

According to a preferred embodiment, the present invention uses a distributed routing protocol such as GMPLS or PNNI to provide information to the nodes on the topology of the network to improve the ability of the nodes to select the best source of timing information.

GMPLS is described in the following requests for comment (RFC) published by the Internet Engineering Task Force:
- RFC 3471: Generalized Multi-Protocol Label Switching (GMPLS) Signaling Functional Description, Jan, 2003
- RFC 3473: Generalized Multi-Protocol Label Switching (GMPLS) Signaling Resource ReserVation Protocol-Traffic Engineering (RSVP-TE) Extensions, Jan 2003
- RFC 3945: Generalized Multi-Protocol Label Switching (GMPLS) Architecture, Oct. 2004-11-27
- RFC 3946: Generalized Multi-Protocol Label Switching (GMPLS) Extensions for Synchronous Optical Network (SONET) and Synchronous Digital Hierarchy (SDH) Control, Oct. 2004

PNNI (Private Network-to-Network Interface) is used for distributing topology information between switches and clusters of switches. This information is used to compute paths through the network. PNNI is described in "Private Network-Network Interface Specification Version 1.1" (PNNI 1.1), The ATM Forum, af-pnni-0055.002, March 2002.

Routing protocols such as GMPLS and PNNI work by establishing a self-routing network. In order to achieve this, the routing protocols obtain information on the topology of the network. According to the present embodiment of the invention, topology information, obtained by a routing protocol and information on the timing status of each of the nodes is provided to the nodes of a network and is used by them to allow improved selection of a source of timing information by those nodes. The information provided effectively gives each node a map of the network showing the timing status of the other nodes. Use of the map advantageously provides comprehensive, dynamically updatable information on the derivation of the timing information available in the neighbouring nodes. Each node refers to the timing information map established for that node and selects a neighbouring node as a source of timing information on the basis of the map.

ASTN, described in G.807, provides a control plane consisting of interconnected entities for the setting up and release of connections across a transport network. According to a preferred embodiment of the present invention as detailed below, extensions are proposed to GMPLS so that timing status information may be distributed using the ASTN control plane based on the GMPLS protocol suite described in the above GMPLS RFCs. These extensions allow:
- detection of timing loops in the primary path;
- detection of timing loops in the secondary path chosen after a single fault;
- evaluation of additional paths;
- optionally, automatic configuration of the interfaces to be used for timing information distribution;
- concurrent use of dynamic and static configurations.

The ASTN implementation enables distribution of node identification data and synchronisation properties (e.g. "PRC", "SSU", or "SEC"). This information allows the node priority table entries to be enhanced and eases the selection of synchronisation sources.

An example of how suitable extensions may be implemented is now given by way of example. According to this embodiment, each node stores data, some manually, pre-configured and static; some obtained dynamically via the routing protocol. The manually, pre-configured status information comprises:
- node_ID (ID): an identifier indicating the local node;
- timing_information_type (enumeration): the type of equipment clock that the local node provides (e.g. PRC, SSU, SEC), note that for SSUs, the timing information quality is another important differentiator;
- timing_information_quality (float): a representation of the quality of the equipment timing information, for SSUs this information can be used to differentiate between a SSU with high timing information quality and a SSU with low timing information quality;
- timing_information_derivation (vector): describes the derivation of the timing information;
   - primary_source (vector): describes the primary source from which the timing information is currently derived. It contains the following fields:
      ■ remote-node-ID (ID): an identifier indicating the node from which the local node derives the timing information;
      ■ local_interface_ID (ID): an identifier indicating the local interface from which the local node derives the timing information.
   - secondary_source (vector): describes the secondary source from which the timing information will be derived after a failure of the source at the primary link: has the same fields as primary _source:
      ■ remote_node_ID (ID);
      ■ local_interface_ID (ID).

Note that the PRC does not need to distribute the primary source vector information. For the PRC and SSUs with high timing information quality no secondary source should be given.

The status information obtained dynamically via the chosen routing protocol comprises:
- hops_to_PRC (integer): the number of inter-node links or hops to the PRC along the primary timing information interface;
- hops_to_SSU (integer): the number of inter-node links or hops to the next SSU along the primary timing information interface;
- timing-information-node-table (vector): This table describes how other (remote) nodes in the network get their timing information. It contains the following fields:
   - remote_node_ID (ID, key): the ID of the remote node;
   - timing_information_type type (enumeration): the type of equipment clock from which the remote node derives its timing information;
   - timing_information_quality (float): representation of timing information quality;
   - timing_information_derivation (vector): information on the source where the remote node obtains its primary and secondary timing information;
- timing_information_interface_table (vector): this table describes the local interfaces which are to be used for timing information derivation. It contains the following fields:
   - local_if_ID (ID, key): this is the local interface identifier;
   - remote_node_ID (ID): the identifier of the node to which the interface connects;
   - loop_primary (Boolean): is set to "true" if a timing information distribution loop is formed on the primary path;
   - loop_secondary (Boolean): is set to "true"if a timing information distribution loop is formed on at least one of the secondary paths;
   - timing_information_rules_ok_primary (Boolean): value "true" SDH timing information distribution rules are met on this interface for the primary path; value "false": otherwise;
   - timing_information_rules_ok_secondary (Boolean): SDH timing information distribution rules: "true" rules are met on this interface for all secondary paths, "false": otherwise;
   - hops_to_SSU (integer): the number of SECs to the next SSU or to the PRC (if no SSU in between);
   - number_of_SSU (integer): the number of SSUs to the PRC;
   - hops_to_PRC (integer): the number of SECs to the PRC;
   - priority (integer): the priority of the link to be used for timing information derivation after a failure (this is determined from the above values).

According to a preferred embodiment, each node sends to all other nodes in the network by means of routing protocols its own status information comprising:
- node_ID;
- timing_information_type;
- timing_information_quality;
- timing_information_derivation.

Status information can be transported by any routing protocol, e.g. OSPF, IS-IS or PNNI. OSPF transports this information in Link State Advertisements (LSAs) grouped in OSPF PDUs, as described in RFC 2370. Internet Engineering Task Force RFC 2370, "The OSPF Opaque LSA Option" R. Coltun, FORE Systems, July 1998 specifies the area flooding scope of the Traffic Engineering (TE) link-state advertisements (LSA), in particular of opaque LSAs. According to the intermediate system-intermediate system (IS-IS) protocol, these packets are called Link State PDUs. When using OSPF, GMPLS TE links can be advertised using Opaque LSAs of Type 10. The Traffic Engineering (TE) LSA (whose area flooding scope is specified in RFC 2370), has one top-level Type/Length/Value (TLV) triplet and one or more nested sub-TLV triplet for extensibility. The top-level triplet can take one of two values: (1) Router Address (referred to as the Node TLV) or (2) TE-Link TLV.

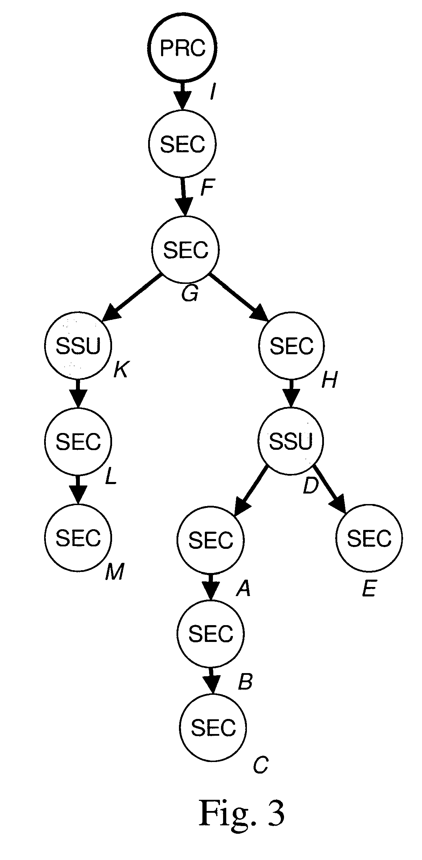

The Node TLV is extended using sub-TLVs to carry the timing_information_type and timing_information_derivation data objects. In this way status information about the timing properties of nodes as well as the information about how a node derives its timing are distributed to all other nodes in the network. Using this information each node builds the timing information node table that can be used to determine a timing distribution tree, as shown by way of example in Figure 3.

From the distributed information each node derives its local synchronisation source priority table. This table is used to decide from which interface to obtain timing information after a failure.

According to a preferred embodiment, with the local synchronisation source priority table established, checks are carried out for timing loops on the primary path, i.e. the path with the highest quality / priority attributes. Advantageously, each node can calculate whether the remote node connected at each interface derives its timing information from the local node: an arrangement that could result in the formation of a loop in the timing path.

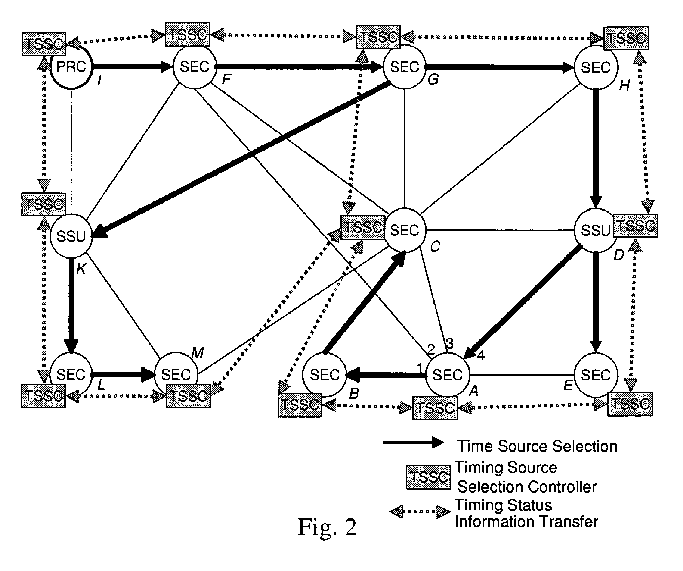

Figure 2 shows a network similar to that of Figure 1 but with a timing source selection controller (TSSC) associated with each node. The lines and arrows of Figure 2 have the same significance as those of Figure 1, except that Figure 2 also shows the transfer of timing status information between TSSCs by means of dotted, double-headed arrows. The exchange of timing status information between nodes will not always follow the same path as the flow of timing information between those nodes. For example, as illustrated in Figure 2, timing status information flows between PRC node I and SSU node K directly, whereas the corresponding flow of timing information from PRC node I to SSU node K travels via SEC nodes F and G. Node A exchanges timing status information with nodes B and E but derives its timing information from node D.

The network of Figure 2 is reflected in the timing derivation tree of Figure 3. A remote node is defined as dependent from a local node if it derives its timing from the local node and is independent if it derives its timing from a different node. For example in Figure 3, node C is shown as being connected to PRC node I via nodes B, A, D, H, G, F. From Figure 3 it is clear that node C is dependent from nodes B, A, D, H, G, F and PRC node I.

To determine the status of a remote node, the timing distribution is traced back from the remote node using the information contained in the synchronisation source priority table. The remote node is designated as independent if a PRC is reached without traversing the local node. If the local node is traversed before finding a PRC, the remote node is designated as dependent from the local node. In this case the interface should not be used to source the timing information.

If the local node is not traversed before finding a PRC, the remote node is independent from the local node. The local node may use the timing information derived from an interface associated with an independent remote node if the relevant SDH timing distribution rules are met (see below). If the remote node is dependent, the variable loop_primary is set to "true", otherwise to "false". If only one independent interface can be found it will not be possible to derive the SDH timing from another interface.

Checks are also carried out for timing loops on secondary paths, where available. In principle, the check for secondary paths works as described for the primary path. It is necessary to check all possible secondary paths. If one of the secondary paths is dependent, the variable loop_secondary for the corresponding interface is set to "true", otherwise to "false".

For each interface from which the timing may potentially be derived, it is necessary to check whether the SDH timing information distribution rules are fulfilled. These are set out in G.803, section 8 where the maximum length of the synchronisation reference chain is limited, as follows:
- number of SSUs <= 10;
- total number of SECs <= 60;
- number of hops to next SSU or PRC <= 20.

The timing information distribution rules need to be checked on the primary path and all possible secondary paths independently. If the rules are met on the primary path the variable timing_information_rules_ok_primary is set to "true", otherwise to "false". If the rules are met on all secondary paths, the variable timing_information_rules_ok_secondary is set to "true", otherwise to "false".

The available links that fulfil the SDH timing information distribution rules (on the primary and secondary paths) and which are independent are given a link priority so that the link with the best timing information quality is always chosen. The link priority can be determined by sorting all links according to the following criteria:
1. from all connected nodes: the one or ones with the lowest number of hops to the next SSU or the PRC gets higher priority;
2. from the remaining links: the link or links with no SSU in the path to the PRC gets higher priority;
3. from the remaining links: the link or links with the lowest number of SSUs gets higher priority;
4. from the remaining links: the link or links with the lowest number of SECs gets higher priority;
5. from the remaining links: the link or links with the lowest local interface ID gets higher priority.

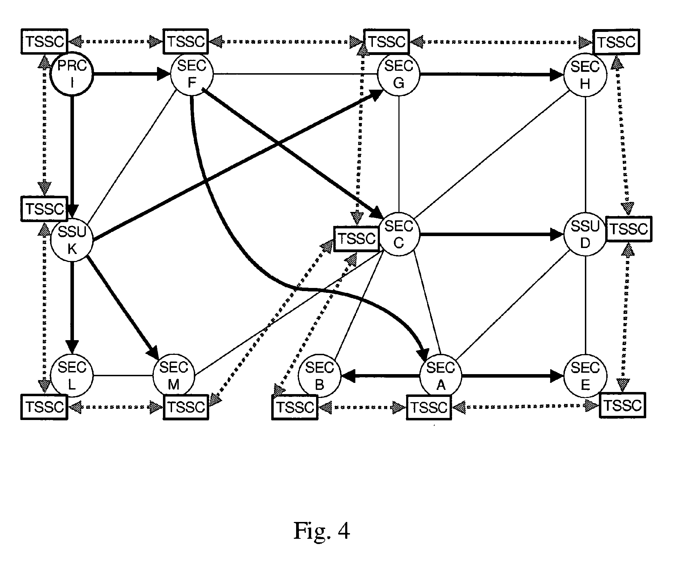

This sorting algorithm results in each interface being given a unique priority, as illustrated by the networks of Figure 4.

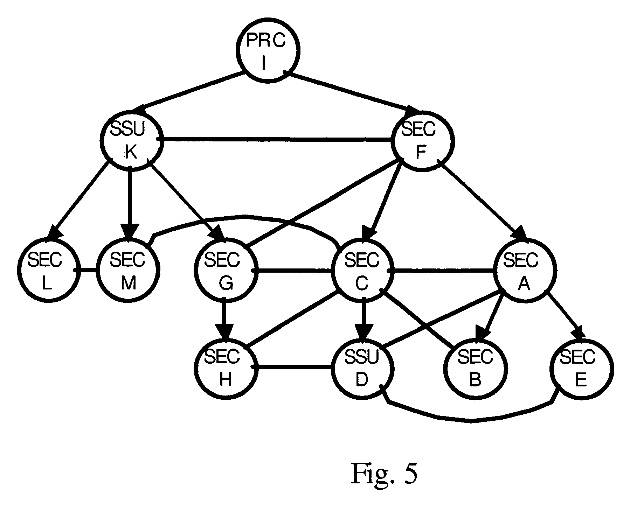

In Figure 4, the sources of timing information are chosen according to the algorithm specified above. Nodes B and E select node A to supply timing information. Figure 5 shows the topology of the timing network of Figure 4 in the form of a tree diagram. As shown in Figure 5, node A receives timing information from node F.

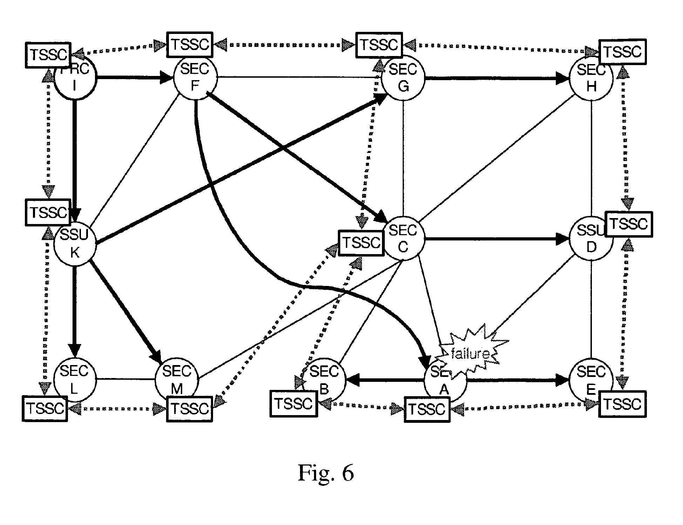

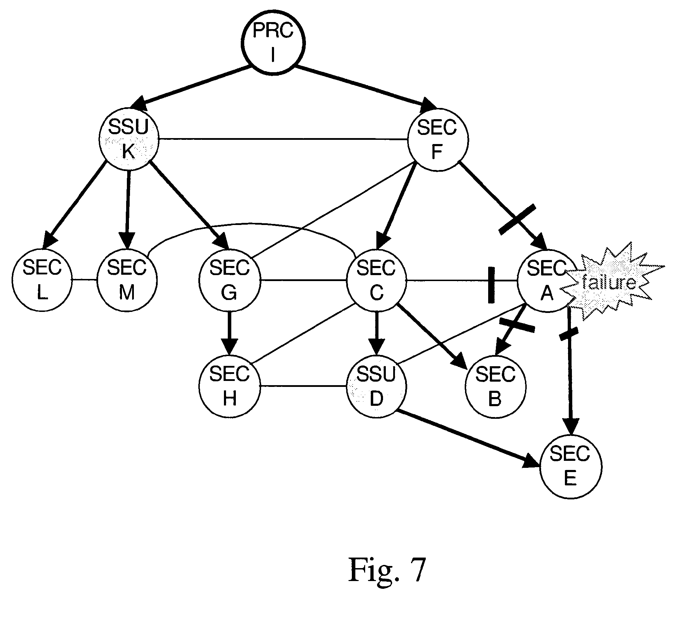

The behaviour of the system in the case of a single fault will now be described with reference to Figures 6 and 7. Figure 6 shows the network of Figure 4 but in which node A has failed. After a failure of a link or node it is necessary for any node that derives its timing information from that node or via that link to immediately switch to another timing source. Hence, upon failure of node A, both of nodes B and E act to locate an alternative source of timing information and to switch to that alternative source. The switching is based on the information contained in the synchronisation source priority table of the nodes affected. Advantageously, this information is dynamically updated to reflect changes in the timing distribution network by exploiting the information provided by the routing protocol. The affected nodes switch to an interface that is indicated by the table as not resulting in a timing loop and which fulfils the timing derivation rules. If there is more than one suitable interface, the one with the highest priority is chosen.

As shown in Figure 7, upon detection of the failure, node B selects as source of timing information node C. Node C is an equal distance from PRC node I to the original choice, node A. Node E selects as source timing information node D. Node D is a greater distance from PRC node I than node A, the original choice, but still meets the timing criteria.

The behaviour of the system in the case of multiple faults will now be described. As the secondary paths have been checked, it is ensured that a new timing source may be selected that will work properly in the presence of a single fault. However, it cannot be guaranteed that the secondary paths will work in the presence of additional faults. It is, however, possible to check the new configuration. To achieve this, according to a preferred embodiment, the node that has detected the fault and has switched sends a message to all other nodes and notifies them of the failure status and that it has switched to a secondary path. The other nodes then re-check their timing sources. If any of their secondary paths no longer meets the criteria for timing derivation, an alarm will be raised.

After the occurrence of multiple failures, some nodes might no longer be able to derive their timing: i.e. there might be no suitable source accessible. These nodes will detect this problem, e.g. by reference to their priority tables. A partial reconfiguration of the network in the form of a spanning tree may be necessary to resolve the problem. The reconfiguration should be done in a harmonised way for the whole spanning tree (see below) or closed parts thereof.

The Spanning-Tree Protocol is a link management protocol that provides path redundancy while preventing multiple active paths between stations. Multiple active paths are a problem in Ethernet networks, as they introduce the risk of creating loops. Infinite looping of frames and the duplication of messages may result. Spanning-Tree Protocol provides path redundancy, by defining a tree that spans all switches in an extended network. Spanning-Tree Protocol forces certain redundant data paths into a standby state. Then, if one segment in the Spanning-Tree Protocol becomes unreachable, or if Spanning-Tree Protocol costs change, the spanning-tree algorithm reconfigures the spanning-tree topology and re-establishes a link to the segment by activating the standby path. The Spanning Tree is standardized in IEEE 802.1D-1998, "Part 3: Media Access Control (MAC) Bridges", see especially chapter 8. The Spanning tree protocol is also explained in Radia Perlman: "Interconnections", Second Edition, 1999, Addison-Wesley, ISBN: 0201634481.

Instead of manually configuring the timing information at each node, it is advantageously possible, according to the present invention, to automatically configure the network by means of a spanning tree algorithm. A node indicates whether it allows automatic configuration by setting an automatic_configuration bit and distributing this bit to all other nodes in the network. Hence it is possible to decide whether to manually configure the complete network or to let the complete network (or parts of it) be automatically configured.

A further variable is required:
- automatic_configuration (Boolean): describes whether a node is automatically or manually configured. This variable is located in each node, but as mentioned below, the information needs to be distributed to all other nodes using the protocol so that each node knows whether a node automatically adjusts its timing information selection or not.
   - if set to "true", automatic configuration of the timing_information_source_node_ID and timing_information_interface_ID is allowed. In that case these values will initially be set to zero. The local node and the other nodes use the same algorithm to derive which interface to use for timing information distribution.
   - if set to "false" no automatic configuration is allowed. In that case timing_information_source_node_ID and timing_information_interface_ID must be set to a non-zero value.

The topology of the network (the arrangement of SDH links) is known due to the routing protocols and the GMPLS extensions described above. Further extensions may be used to indicate which SDH links are suitable for SDH timing distribution. For example, SDH links that are established over IP or MPLS links or ODU connections where the ODU connection itself needs regeneration may not be suitable for timing distribution.

Each node can decide locally from which neighbouring node and from which interface to derive the SDH timing. This is may be done using the spanning tree algorithm to avoid loops. In building the spanning tree algorithm, all nodes derive the same spanning tree beginning at the PRC. Each node must follow independently the appropriate rules (as defined above). Nodes that have not set their automatic_configuration bit to "true" provide a fixed connection in the spanning tree.

The present invention advantageously provides a mechanism for providing better information to a node to enable it to correctly decide on the best source of timing information. According to a preferred embodiment, the present invention advantageously allows timing loops to be avoided. Advantageously, the present invention provides a network better able to cope with topology changes and to distribute timing information in hybrid networks based on synchronous and non-synchronous technologies.

The present invention is described above by way of example only and is not limited to the specific embodiments described. In particular, the invention may be implemented with any suitable protocol that obtains and distributes network topology information. The present invention also may be applied to any communication system in which quality-sensitive timing information is exchanged between nodes and in which the quality of the timing information may vary.

Abbreviations.
- ASTN -: Automatically Switched Transport Networks
- DWDM -: Dense Wavelength Division Multiplex
- GMPLS -: Generalised Multi-Protocol Label Switching
- ID -: Identification
- IP: Internet Protocol
- IS-IS -: Intermediate System-Intermediate System
- LSA -: Link State Advertisement
- MPLS -: Multi-Protocol Label Switching
- NE -: Network Element
- ODU -: Optical Channel Data Unit
- OSPF -: Open Shortest Path First
- OTN: .Optical Transport Network
- PDU -: Protocol Data Unit
- PNNI -: Private Network to Network Interface
- PRC -: Primary Reference Clock
- SDH-: Synchronous Digital Hierarchy
- SEC: SDH Equipment Clock
- SSM: Synchronisation Status Message
- SSU -: Synchronisation Supply Unit
- TE -: Traffic Engineering
- TLV -: Type Length Value

## Claims

1. A communications network comprising a plurality of nodes (A - I, K - M) in which each node comprises means for communicating timing information with at least one other node and in which each node is associated with a timing status (PRC, SSU, SEC), each one of the network nodes comprises topology means for detecting the topology of the network and for detecting the timing status of each node (A - I, K - M), wherein timing status information sent by a node and used by other nodes to detect the timing status of each other node comprises identification of the node sending the timing information, the type of equipment clock from which said sending node derives its timing information, timing information quality and information on the source where said sending node obtains primary and secondary timing information and every network node further comprises a timing information node table comprising information on sources and derivation of the timing information and quality of said timing information of all other nodes in the network as well as every network node comprises selection means for using the detected information in a process of selecting a source from which the node derives timing information.

2. The communications network as claimed in claim 1 comprising means for detecting the flow of timing information between the nodes (A - I, K - M) and for providing information on the timing flow to the selected node.

3. The communications network as claimed in any above claim comprising means for detecting those nodes that would result in a timing loop if chosen as the source of timing information.

4. The communications network as claimed in any above claim in which the topology means is distributed among the plurality of nodes (A - I, K - M).

5. The communications network as claimed in any above claim in which the information provided comprises information on the topology of parts of the network including nodes not directly connected to the selected node.

6. The communications network as claimed in any above claim in which the selected node comprises means for receiving the information provided by the topology means and means for selecting one of the other nodes as a source of timing information on the basis of the information received.

7. The communications network as claimed in any above claim in which the topology means is arranged to detect in use a change in the network.

8. The communications network as claimed in claim 7 in which the change in the network comprises a fault in a node (A - I, K - M) or in a connection between nodes.

9. The communications network as claimed in any above claim in which the selected node is arranged to repeat the selection process upon detection of a change in the network.

10. The communications network as claimed in any above claim in which the detected information is provided to each node (A - I, K - M) of the network and each node (A - I, K - M) comprises selection means for using the detected information in a process of selecting a source of timing information for that node.

11. The communications network as claimed in any above claim in which the selection process comprises a spanning-tree algorithm.

12. The communications network as claimed in claim 11 in which each node (A-I, K - M) is arranged to execute the spanning tree algorithm upon detection of a change in the network.

13. The communications network as claimed in any above claim in which the nodes (A - I, K - M) comprise means for exchanging data synchronised to the timing information.

14. The communications network as claimed in any above claim in which the topology means comprises a routing protocol.

15. The communications network as claimed in any above claim in which the communications network is a synchronous hierarchy communication network.

16. A method of selecting a source of timing information in a communications network comprising a plurality of nodes (A - I, K - M), the method including the steps, performed by every network node, of: detecting information concerning the topology of the communications network, detecting information concerning the timing status (PRC, SSU, SEC) of the nodes (A - I, K - M), wherein timing status information sent by a node and used by other nodes to detect the timing status of each other node comprises identification of the node sending the timing information, the type of equipment clock from which said sending node derives its timing information, timing information quality and information on the source where said sending node obtains primary and secondary timing information, maintaining a timing information node table comprising information on sources and derivation of the timing information and quality of said timing information of all other nodes in the network and selecting a source from which the node derives timing information using the information provided.

17. The method as claimed in claim 16 including the steps of detecting the flow of timing information between the nodes (A - I, K - M) and providing the timing flow information to the selected node.

18. The method as claimed in any of claims 16 and 17 including the step of detecting those ones of the plurality of nodes (A - I, K - M) that would result in a timing loop if chosen as a source of timing information.

19. The method as claimed in any of claims 16 to 18 in which the topology means is distributed among the plurality of nodes (A - I, K - M).

20. The method as claimed in any of claims 16 to 19 in which the information provided comprises information on the topology of parts of the network including nodes not directly connected to the selected node.

21. The method as claimed in any of claims 16 to 20 in which the topology means comprises a routing protocol.

22. The method as claimed in any of claims 16 to 21 including the steps of providing to the selected node the detected topology and status information and of selecting by the selected node one of the other nodes as a source of timing information on the basis of the information received.

23. The method as claimed in any of claims 16 to 22 in which the topology means detects a change in the network.

24. The method as claimed in claim 23 in which the change in the network comprises a fault in a node (A - I, K - M) or in a connection between nodes.

25. The method as claimed in any of claims 16 to 24 in which the selection process is repeated upon detection of a change in the network.

26. The method as claimed in any of claims 16 to 25 in which the detected information is provided to each node (A - I, K - M) of the network and the detected information is used in a process of selecting a source of timing information for each node.

27. The method as claimed in any of claims 16 to 26 in which the selection process comprises a spanning-tree algorithm.

28. The method as claimed in claim 27 in which each node (A - I, K - M) executes the spanning tree algorithm upon detection of a change in the network.

29. The method as claimed in any of claims 16 to 28 including the step of exchanging between the nodes (A - I, K - M) data synchronised to the timing information.

30. The method as claimed in claims 16 to 29 in which the topology information is provided by means of a routing protocol.

31. The method as claimed in claims 16 to 30 in which the communications network is a synchronous hierarchy communication network.

## Patentansprüche

1. Kommunikationsnetz, umfassend eine Mehrzahl von Knoten (A-I, K-M), wobei jeder Knoten Mittel zum Kommunizieren von Taktinformationen mit wenigstens einem anderen Knoten umfasst und wobei jeder Knoten mit einem Taktstatus (PRC, SSU, SEC) assoziiert ist, jeder der Netzknoten Topologiemittel zum Erkennen der Topologie des Netzes und zum Erkennen des Taktstatus jedes Knotens (A-I, K-M) umfasst, wobei die Taktstatusinformationen, die durch einen Knoten gesendet und durch die anderen Knoten verwendet werden, um den Taktstatus jedes anderen Knotens zu erkennen, die Kennung des Knotens, der die Taktinformationen sendet, den Typ des Gerätetakts, von dem der sendende Knoten seine Taktinformationen ableitet, die Taktinformationsqualität und Informationen über die Quelle, von welcher der sendende Knoten primäre und sekundäre Taktinformationen erhält, umfassen, und jeder Netzknoten ferner eine Taktinformationsknotentabelle umfasst, die Informationen über Quellen und Ableitung der Taktinformationen und die Qualität der Taktinformationen aller anderen Knoten im Netz umfasst, sowie jeder Netzknoten Wahlmittel zum Verwenden der erfassten Informationen in einem Prozess des Auswählens einer Quelle umfasst, von welcher der Knoten Taktinformationen ableitet.

2. Kommunikationsnetz nach Anspruch 1, umfassend Mittel zum Erfassen des Flusses von Taktinformationen zwischen den Knoten (A-I, K-M) und zum Liefern von Informationen über den Taktfluss an den ausgewählten Knoten.

3. Kommunikationsnetz nach einem der vorhergehenden Ansprüche, umfassend Mittel zum Erkennen jener Knoten, die bei ihrer Wahl als die Taktinformationsquelle zu einer Taktschleife führen würden.

4. Kommunikationsnetz nach einem der vorhergehenden Ansprüche, wobei das Topologiemittel unter der Mehrzahl von Knoten (A-I, K-M) verteilt ist.

5. Kommunikationsnetz nach einem der vorhergehenden Ansprüche, wobei die bereitgestellten Informationen Informationen über die Topologie von Teilen des Netzes umfassen, die Knoten umfassen, die mit dem ausgewählten Knoten nicht direkt verbunden sind.

6. Kommunikationsnetz nach einem der vorhergehenden Ansprüche, wobei der ausgewählte Knoten Mittel zum Empfangen der durch die Topologiemittel bereitgestellten Informationen und Mittel zum Auswählen eines der anderen Knoten als eine Taktinformationsquelle auf der Basis der empfangenen Informationen umfasst.

7. Kommunikationsnetz nach einem der vorhergehenden Ansprüche, wobei das Topologiemittel so ausgelegt ist, dass es bei Verwendung eine Änderung im Netz erkennt.

8. Kommunikationsnetz nach Anspruch 7, wobei die Änderung im Netz einen Fehler in einem Knoten (A-I, K-M) oder in einer Verbindung zwischen Knoten umfasst.

9. Kommunikationsnetz nach einem der vorhergehenden Ansprüche, wobei der ausgewählte Knoten so ausgelegt ist, dass er den Auswählprozess bei Erkennung einer Änderung im Netz wiederholt.

10. Kommunikationsnetz nach einem der vorhergehenden Ansprüche, wobei die erfassten Informationen an jeden Knoten (A-I, K-M) des Netzes geliefert werden und jeder Knoten (A-I, K-M) Auswahlmittel zum Verwenden der erfassten Informationen in einem Prozess des Auswählens einer Taktinformationsquelle für diesen Knoten umfasst.

11. Kommunikationsnetz nach einem der vorhergehenden Ansprüche, wobei der Auswahlprozess einen Spannbaumalgorithmus umfasst.

12. Kommunikationsnetz nach Anspruch 11, wobei jeder Knoten (A-I, K-M) so ausgelegt ist, dass er den Spannbaumalgorithmus bei Erkennung einer Änderung im Netz ausführt.

13. Kommunikationsnetz nach einem der vorhergehenden Ansprüche, wobei die Knoten (A-I, K-M) Mittel zum Austauschen von Daten synchronisiert mit den Taktinformationen umfassen.

14. Kommunikationsnetz nach einem der vorhergehenden Ansprüche, wobei das Topologiemittel ein Leitwegsuchprotokoll umfasst.

15. Kommunikationsnetz nach einem der vorhergehenden Ansprüche, wobei es sich bei dem Kommunikationsnetz um ein Synchron-Hierarchie-Kommunikationsnetz handelt..

16. Verfahren zum Auswählen einer Taktinformationsquelle in einem Kommunikationsnetz, das eine Mehrzahl von Knoten (A-I, K-M) umfasst, wobei das Verfahren die folgenden durch jeden Netzknoten ausgeführten Schritte umfasst: Erfassen von Informationen in Bezug auf die Topologie des Kommunikationsnetzes, Erfassen von Informationen in Bezug auf den Taktstatus (PRC, SSU, SEC) der Knoten (A-I, K-M), wobei die Taktstatusinformationen, die durch einen Knoten gesendet und durch andere Knoten verwendet werden, um den Taktstatus jedes anderen Knotens zu erkennen, die Kennung des Knotens, der die Taktinformationen sendet, den Typ des Gerätetakts, von dem der sendende Knoten seine Taktinformationen ableitet, die Taktinformationsqualität und Informationen über die Quelle, von welcher der sendende Knoten primäre und sekundäre Taktinformationen erhält, umfassen, Unterhalten einer Taktinformationsknotentabelle, die Informationen über Quellen und Ableitung der Taktinformationen und die Qualität der Taktinformationen aller anderen Knoten im Netz umfasst, und Auswählen unter Verwendung der bereitgestellten Informationen einer Quelle, von welcher der Knoten Taktinformationen ableitet.

17. Verfahren nach Anspruch 16, umfassend die Schritte des Erfassens des Flusses von Taktinformationen zwischen den Knoten (A-I, K-M) und Lieferns der Taktflussinformationen an den ausgewählten Knoten.

18. Verfahren nach einem der Ansprüche 16 und 17, umfassend den Schritt des Erkennens jener der Mehrzahl von Knoten (A-I, K-M), die bei ihrer Wahl als Taktinformationsquelle zu einer Taktschleife führen würden.

19. Verfahren nach einem der Ansprüche 16 bis 18, wobei das Topologiemittel unter der Mehrzahl von Knoten (A-I, K-M) verteilt ist.

20. Verfahren nach einem der Ansprüche 16 bis 19, wobei die bereitgestellten Informationen Informationen über die Topologie von Teilen des Netzes umfassen, die Knoten umfassen, die mit dem ausgewählten Knoten nicht direkt verbunden sind.

21. Verfahren nach einem der Ansprüche 16 bis 20, wobei das Topologiemittel ein Leitwegsuchprotokoll umfasst.

22. Verfahren nach einem der Ansprüche 16 bis 21, umfassend die Schritte des Lieferns der erfassten Topologie- und Statusinformationen an den ausgewählten Knoten und Auswählens durch den ausgewählten Knoten eines der anderen Knoten als eine Taktinformationsquelle auf der Basis der empfangenen Informationen.

23. Verfahren nach einem der Ansprüche 16 bis 22, wobei das Topologiemittel eine Änderung im Netz erkennt.

24. Verfahren nach Anspruch 23, wobei die Änderung im Netz einen Fehler in einem Knoten (A-I, K-M) oder in einer Verbindung zwischen Knoten umfasst.

25. Verfahren nach einem der Ansprüche 16 bis 24, wobei der Auswahlprozess bei Erkennung einer Änderung im Netz wiederholt wird.

26. Verfahren nach einem der Ansprüche 16 bis 25, wobei die erfassten Informationen an jeden Knoten (A-I, K-M) des Netzes geliefert werden und die erfassten Informationen in einem Prozess des Auswählens einer Taktinformationsquelle für jeden Knoten verwendet werden.

27. Verfahren nach einem der Ansprüche 16 bis 26, wobei der Auswahlprozess einen Spannbaumalgorithmus umfasst.

28. Verfahren nach Anspruch 27, wobei jeder Knoten (A-I, K-M) den Spannbaumalgorithmus bei Erkennung einer Änderung im Netz ausführt.

29. Verfahren nach einem der Ansprüche 16 bis 28, umfassend den Schritt des Austauschens zwischen den Knoten (A-I, K-M) von Daten synchronisiert mit den Taktinformationen.

30. Verfahren nach einem der Ansprüche 16 bis 29, wobei die Topologie-Informationen durch ein Leitwegsuchprotokoll bereitgestellt werden.

31. Verfahren nach Anspruch 16 bis 30, wobei es sich bei dem Kommunikationsnetz um ein Synchron-Hierarchie-Kommunikationsnetz handelt.

## Revendications

1. Réseau de communication comprenant une pluralité de noeuds (A-I, K-M) dans lequel chaque noeud comprend un moyen pour communiquer une information de rythme avec au moins un autre noeud et dans lequel chaque noeud est associé à un statut de rythme (PRC, SSU, Sec), chacun des noeuds de réseau comprend un moyen de topologie pour détecter la topologie du réseau et pour détecter le statut de rythme de chaque noeud (A-I, K-M), dans lequel une information de statut de rythme émise par un noeud et utilisée par d'autres noeuds pour détecter le statut de rythme de chaque autre noeud comprend une identification du noeud envoyant l'information de rythme, le type d'horloge d'équipement d'après laquelle ledit noeud émetteur déduit son information de rythme, une qualité d'information de rythme et une information concernant la source où ledit noeud émetteur obtient une information de rythme primaire et secondaire et chaque noeud de réseau comprend en outre une table de noeuds d'information de rythme comprenant une information concernant des sources et une déduction de l'information de rythme et d'une qualité de ladite information de rythme de tous les autres noeuds dans le réseau ainsi que chaque noeud de réseau comprend un moyen de sélection pour utiliser l'information détectée dans un processus de sélection d'une source d'après laquelle le noeud déduit une information de rythme.

2. Réseau de communication selon la revendication 1, comprenant un moyen pour détecter le flux d'information de rythme entre les noeuds (A-I, K-M) et pour fournir une information concernant le flux de rythme au noeud sélectionné.

3. Réseau de communication selon une quelconque des revendications ci-dessus, comprenant un moyen pour détecter les noeuds qui donneraient une boucle de rythme si ils étaient choisis comme la source de l'information de rythme.

4. Réseau de communication selon une quelconque des revendications ci-dessus, dans lequel le moyen de topologie est réparti parmi la pluralité de noeuds (AI, K-M).

5. Réseau de communication selon une quelconque des revendications ci-dessus, dans lequel l'information fournie comprend une information concernant la topologie des parties du réseau incluant des noeuds n'étant pas directement connectés au noeud sélectionné.

6. Réseau de communication selon une quelconque des revendications ci-dessus, dans lequel le noeud sélectionné comprend un moyen pour recevoir l'information fournie par le moyen de topologie et un moyen pour sélectionner un des autres noeuds comme une source d'information de rythme sur la base de l'information reçue.

7. Réseau de communication selon une quelconque des revendications ci-dessus, dans lequel le moyen de topologie est agencé afin de détecter en utilisation un changement dans le réseau.

8. Réseau de communication selon la revendication 7, dans lequel le changement dans le réseau comprend une défaillance dans un noeud (A-I, K-M) ou dans une connexion entre des noeuds.

9. Réseau de communication selon une quelconque des revendications ci-dessus, dans lequel le noeud sélectionné est agencé afin de répéter le processus de sélection lors de la détection d'un changement dans le réseau.

10. Réseau de communication selon une quelconque des revendications ci-dessus, dans lequel l'information détectée est fournie à chaque noeud (A-I, K-M) du réseau et chaque noeud (A-I, K-M) comprend un moyen de détection pour utiliser l'information détectée lors d'un processus de sélection d'une source d'information de rythme pour ce noeud.

11. Réseau de communication selon une quelconque des revendications ci-dessus, dans lequel le processus de sélection comprend un algorithme d'interconnexion arborescente par chemin critique.

12. Réseau de communication selon la revendication 11, dans lequel chaque noeud (A-I, K-M) est agencé afin d'exécuter l'algorithme d'interconnexion arborescente par chemin critique lors de la détection d'un changement dans le réseau.

13. Réseau de communication selon une quelconque des revendications ci-dessus, dans lequel les noeuds (A-I, K-M) comprennent un moyen pour échanger des données synchronisé à l'information de rythme.

14. Réseau de communication selon une quelconque des revendications ci-dessus, dans lequel le moyen de topologie comprend un protocole de routage.

15. Réseau de communication selon une quelconque des revendications ci-dessus, dans lequel le réseau de communication est un réseau de communication à hiérarchie synchrone.

16. Procédé de sélection d'une information de source de rythme dans un réseau de communication comprenant une pluralité de noeuds (A-I, K-M), le procédé incluant les étapes, exécutées par chaque noeud de réseau, consistant à : détecter une information concernant la topologie du réseau de communication, détecter une information concernant le statut de rythme (PRC, SSU, Sec) des noeuds (A-I, K-M), dans lequel une information de statut de rythme émise par un noeud et utilisée par d'autres noeuds pour détecter le statut de rythme de chaque autre noeud comprend une identification du noeud émettant l'information de rythme, le type d'horloge d'équipement d'après laquelle ledit noeud émetteur déduit son information de rythme,une qualité d'information de rythme et une information concernant la source où ledit noeud émetteur obtient une information de rythme primaire et secondaire, conserver une table de noeuds d'information de rythme comprend une information concernant des sources et une déduction de l'information de rythme et une qualité de ladite information de rythme de tous les autres noeuds dans le réseau et sélectionner une source d'après laquelle le noeud déduit une information de rythme en utilisant l'information fournie.

17. Procédé selon la revendication 16, incluant les étapes consistant à détecter le flux d'information de rythme entre els noeuds (A-I, K-M) et fournir l'information de flux de rythme au noeud sélectionné.

18. Procédé selon une quelconque des revendications 16 et 17, incluant l'étape consistant à détecter ceux de la pluralité de noeuds (A-I, K-M) qui donneraient une boucle de rythme s'ils étaient choisis comme une source d'information de rythme.

19. Procédé selon une quelconque des revendications 16 à 18, dans lequel le moyen de topologie est réparti parmi la pluralité de noeuds (A-I, K-M).

20. Procédé selon une quelconque des revendications 16 à 19, dans lequel l'information fournie comprend une information concernant la topologie de parties du réseau incluant des noeuds n'étant pas directement connectés au noeud sélectionné.

21. Procédé selon une quelconque des revendications 16 à 20, dans lequel le moyen de topologie comprend un protocole de routage.

22. Procédé selon une quelconque des revendications 16 à 21, incluant les étapes consistant à fournir au noeud sélectionné la topologie détectée et l'information de statut et sélectionner par le noeud sélectionné un des autres noeuds comme une source d'information de rythme sur la base de l'information reçue.

23. Procédé selon une quelconque des revendications 16 à 22, dans lequel le moyen de topologie détecte un changement dans le réseau.

24. Procédé selon la revendication 23, dans lequel le changement dans le réseau comprend une défaillance dans un noeud (A-I, K-M) ou dans une connexion entre des noeuds ;

25. Procédé selon une quelconque des revendications 16 à 24, dans lequel le processus de sélection est répété lors de la détection d'un changement dans le réseau.

26. Procédé selon une quelconque des revendications 16 à 25, dans lequel l'information détectée est fournie à chaque noeud (A-I, K-M) du réseau et l'information détectée est utilisée dans un processus de sélection d'une source d'information de rythme pour chaque noeud.

27. Procédé selon une quelconque des revendications 16 à 26, dans lequel le processus de sélection comprend un algorithme d'interconnexion arborescente par chemin critique.

28. Procédé selon la revendication 27, dans lequel chaque noeud (A-I, K-M) exécute l'algorithme d'interconnexion arborescente par chemin critique lors de la détection d'un changement dans le réseau ;

29. Procédé selon une quelconque des revendications 16 à 28, incluant l'étape d'échange entre les noeuds (A-I, K-M) de données synchronisées à l'information de rythme.

30. Procédé selon les revendications 16 à 29, dans lequel l'information de topologie est fournie au moyen d'un protocole de routage.

31. Procédé selon les revendications 16 à 30, dans lequel le réseau de communication est un réseau de communication à hiérarchie synchrone.
